**Europäisches Patentamt**

**European Patent Office**

**Office européen des brevets**

(19)

(11) Veröffentlichungsnummer: **0 149 147**
**B1**

(12) **EUROPÄISCHE PATENTSCHRIFT**

(45) Veröffentlichungstag der Patentschrift:
**22.03.89**

(51) Int. Cl.⁴: **C 01 B 25/46**

(21) Anmeldenummer: **84115285.3**

(22) Anmeldetag: **12.12.84**

(54) Verfahren zur Herstellung von fluorarmen Alkaliphosphatlösungen.

(30) Priorität: **29.12.83 DE 3347421**

(43) Veröffentlichungstag der Anmeldung:
**24.07.85 Patentblatt 85/30**

(45) Bekanntmachung des Hinweises auf die Patenterteilung:
**22.03.89 Patentblatt 89/12**

(84) Benannte Vertragsstaaten:
**BE DE FR GB NL SE**

(56) Entgegenhaltungen:
**FR-A- 2 259 787**
**FR-A- 2 320 900**
**US-A- 2 053 319**

(73) Patentinhaber: **HOECHST AKTIENGESELLSCHAFT,**
**Postfach 80 03 20, D-6230 Frankfurt am Main 80 (DE)**

(72) Erfinder: **Schimmel, Günther, Dr., Ehrenstrasse 16,**
**D-5042 Erftstadt (DE)**
Erfinder: **Gradl, Reinhardt, Dr., Heimbacher Weg 27,**
**D-5042 Erftstadt (DE)**

ACTORUM AG

## Beschreibung

Die vorliegende Erfindung betrifft ein Verfahren zur Herstellung von fluorarmen Alkaliphosphatlösungen aus vorgereinigten Alkaliphosphatlösungen, die erhalten werden aus Rohphosphorsäure durch Extraktion mit organischen Lösemitteln, die mit Wasser nicht oder nur begrenzt mischbar sind, Waschung des rohen Extraktes mit Wasser oder einer Alkalilösung, Rückextraktion der Phosphorsäure aus dem gewaschenen Extrakt mit wäßriger Alkalilösung unter Einstellung eines Alkali : P-Molverhältnisses von gleich oder größer 1:1 und Abtrennen der erhaltenen organischen Phase von der gebildeten; vorgereinigten wäßrigen Alkaliphosphatlösung.

Naßverfahrensphosphorsäure entsteht durch Aufschluß von Apatit-Mineralien mit Mineralsäure unter Abtrennen der gebildeten Calciumverbindung. Diese rohe Phosphorsäure enthält in gelöster Form den Großteil der im Erz enthaltenen kationischen Verunreinigungen sowie das aus dem Apatit stammende Fluorid in Form von HF bzw. $H_2SiF_6$. Es hat daher nicht an Versuchen gefehlt, den F-Gehalt in Phosphorsäure- oder Phosphatlösungen zu reduzieren. Dabei wird aus sauren Lösungen das Fluorid im wesentlichen entweder gasförmig ausgetrieben oder als Feststoff ausgefällt. Im ersten Fall wird die Säure meist mit Dampf behandelt, wobei HF bzw. $SiF_4$ entweichen (vgl. DE-OS 28 22 303). Das Ausfällen im sauren Medium erfolgt häufig als $Na_2SiF_6$, indem man entweder Natrium- oder Siliziumionen oder beide in stöchiometrischen Mengen zusetzt (vg. DE-PS 16 67 435). Alle genannten Verfahren haben den Nachteil, daß sie entweder viel Energie in Form von Dampf und eine aufwendige Strippapparatur benötigen, oder aber daß durch Fällung im sauren Milieu der F-Gehalt aufgrund der hohen Salzlöslichkeit nur ungenügend abgebaut wird. So gelingt z. B. nach der DE-PS 16 67 435 durch Ausfällen von $Na_2SiF_6$ eine Abreicherung nur bis auf 0,2% F/$P_2O_5$. Nach der US-PS 4 026 995 kann in Phosphorsäure das Fluor durch Zugabe von Calciumphosphat als $CaF_2$ ausgefällt werden, wobei bestensfalls eine Abreicherung bis auf 0,3% F/$P_2O_5$ erreichbar ist.

Die Entfernung von Fluoridionen aus neutralen Phosphatlösungen ist ebenfalls schon versucht worden. So wird nach der DE-OS 26 35 893 rohe Phosphorsäure zunächst mit Amylalkohol extraktiv gereinigt, wobei nach Reextraktion mit Wasser eine weitgehend gereinigte Phosphorsäure entsteht, die anschließend mit Natronlauge einer Fällungsreinigung unterzogen wird, bei der eine Natriumphosphatlösung mit einem pH-Wert von 6,5–7 und ca. 20% $P_2O_5$ entsteht, die nur noch ca. 20 ppm $F^-$ enthält. Diese Na-Phosphatlösung wird mit großem Überschuß von festem Hydroxylapatit bzw. tertiärem Calciumphosphat weiterbehandelt, wodurch der $F^-$-Gehalt bis auf wenige ppm F abgebaut werden kann.

Nachteilig an diesem Verfahren ist zweierlei: Zum einen wird teurer, synthertischer Hydroxylapatit in beträchtlichem stöchiometrischem Überschuß eingesetzt (so wird beispielsweise für eine Abreichung von 152,6 ppm F auf 17,3 ppm F eine $Ca^{2+}$-Menge benötigt, die der 42-fachen molaren $F^-$-Menge entspricht), zum anderen ist der gesamte beschriebene Verfahrenskomplex aufwendig und umständlich. Außerdem erhält man mittels der Phosphorsäureextraktion und Rückextraktion mit Wasser nur eine recht unreine Phosphorsäure, die anschließend einer zusätzlichen Fällungsreinigung durch Zugabe von Natronlauge unterzogen wird. Die hierbei nach Filtration entstehende Natriumphosphatlösung wird erst anschließend der eigentlichen Entfluorierung unterworfen.

Eine hinsichtlich der meisten Verunreinigungen befriedigend reine Alkaliphosphatlösung entsteht durch das technisch wesentlich einfachere Verfahren der mehrstufigen extraktiven Aufarbeitung von Rohphosphorsäuren zu Alkaliphosphatlösungen. Lediglich Fluorid wird bei diesem Reinigungsschema nur unzureichend abgetrennt und gelangt deshalb in hohem Maß in die gereinigte Alkaliphosphatlösung.

Je nach Verwendungszweck der Alkaliphosphatlösung wird man die in der Reextraktion eingesetzte Alkalimenge so steuern, daß z. B. ein Alkali : P-Verhältnis von 1:1 bis 2:1 resultiert. Im Falle der Weiterverarbeitung zur Pentanatriumtriphosphat ist es zweckmäßig, bei der Reextraktion direkt das Verhältnis Na : PP auf $5:3 \approx 1,667$ einzustellen.

Es bestand daher die Aufgabe, aus roher Naßverfahrensphosphorsäure durch extraktive Reinigung hergestellte Alkaliphosphatlösungen unterschiedlicher Alkali : P-Molverhältnisse auf einfachem, preiswertem und technisch leicht durchführbarem Wege so weit zu entfluorieren, daß ein für die meisten technischen Anwendungen befriedigend niedriger Fluorid-Gehalt resultiert.

Überraschenderweise läßt sich diese Aufgabe lösen, wenn man

a) eine eingangs erwähnte vorgereinigte Alkaliphosphatlösung mit einer Verbindung eines Erdalkalimetalls Me, die eine Wasserlöslichkeit bei 20 °C von mehr als 0,01 mol $Me^{2+}$/l aufweist, bei Temperaturen von 60 bis 120 °C verrührt, wobei Erdalkaliverbindungen, deren Wasserlöslichkeiten weniger als 5 g/l betragen, mit einer Korngröße eingesetzt werden, die zu mehr als 50% unter 8 µm liegt, und man nach einer Reaktionszeit von 0,5 bis 4 Stunden den gebildeten Niederschlag von der gereinigten Alkaliphosphatlösung abtrennt, wobei man

b) die zur Entfluorierung benötigte Erdalkaliverbindung in der zur Reextraktion benötigten Alkalilösung suspendiert oder löst und die Umsetzung zwischen der Alkaliphosphatlösung und der Erdalkaliverbindung in der Mischzone des Reextraktionsapparates ablaufen läßt.

Als Erdalkaliverbindung mit geringer Wasserlöslichkeit werden vorzugsweise feinteilige Erdalkalioxide oder -hydroxide, insbesondere CaO bzw. $Ca(OH)_2$ in fester Form und die Erdalkaliverbindungen mit hoher Wasserlöslichkeit, wie z. B. $Mg(NO_3)_2$ oder $Ca(NO_3)_2$, in Form ihrer wäßrigen Lösungen der Alkaliphosphatlösung zugesetzt.

Es empfiehlt sich, die Erdalkaliverbindung, bezogen auf die Bildung des entsprechenden Erdalkalifluorids, in der 2 bis 20-fachen stöchiometrischen Menge einzusetzen. Den in Stufe a) nach der Umsetzung der Erdalkaliverbindung gebildeten und von der gereinigten Alkaliphosphatlösung abgetrennten Niederschlag wäscht man am besten mit warmem Wasser aus und führt vorzugsweise den Niederschlag zur Rückgewinnung des darin enthaltenen $P_2O_5$ in die Extraktionsstufe zurück. Dies geschieht am vorteilhaftesten dadurch, daß der Kuchen in dem ohnehin zurückzuführenden Waschraffinat, das ist die bei der Waschung des rohen Phosphorsäureextrakts anfallende wäßrige Lösung, vorher suspendiert oder gelöst wird. Die erfindungsgemäße Verfahrensweise besitzt eine Reihe von Vorteilen, wobei zwei Hauptanforderungen erfüllt werden, nämlich eine gute Entfluorierungswirkung bei niedrigem Materialeinsatz sowie eine hohe Filtrationsleistung während der Abtrennung des fluoridhaltigen neutralen bis alkalischen Filterkuchens.

In nicht vorhersehbarer Weise wurde gefunden, daß sich Erdalkaliverbindungen beim Verrühren mit fluoridhaltigen Natriumphosphatlösungen (Mol-Verhältnis $PO_4 : F \approx 100 : 1$) nicht ausschließlich zu Calciumphosphaten umsetzen, sondern sogar bevorzugt Erdalkalifluorid bilden. Dabei ist bei gegebenem Kation, z.B. $Ca^{2+}$, die Entfluorierungswirkung umso besser, je feinteiliger die Verbindung und je höher deren Löslichkeit ist. So wirkt z.B. $Ca(OH)_2$ besser als CaO gleicher Mahlfeinheit, andererseits zeigt ein grobes $Ca(OH)_2$ gegenüber einem feinteiligen eine extrem verringerte Wirksamkeit.

Lösliche Salze, z.B. $Ca(NO_3)_2$ oder $Mg(NO_3)_2$ verfügen, soweit sie als wäßrige Lösung eingesetzt werden, über eine etwas höhere spezifische Entfluorierungswirkung, weisen jedoch gegenüber Oxiden bzw. Hydroxiden einige Nachteile auf, nämlich

a) Kontaminierung der Phosphatsalzlösung mit fremden Anionen

b) schlechtere Filtrierbarkeit der Maische

c) höherer $P_2O_5$-Einschluß im Filterkuchen

d) ihr höherer Preis, bezogen auf die gleiche Kationenmenge in Form von Oxiden oder Hydroxiden.

Völlig wasserunlösliche Verbindungen, wie z.B. feingemahlener Kalkstein, zeigen keine Wirkung.

Von größter Wichtigkeit ist die Reaktionstemperatur, wie aus den nachfolgenden Beispielen hervorgeht (vgl. Beispiel 3 und 4). Reaktionstemperaturen unter 60 °C führen dazu, daß neben unbefriedigender Entfluorierungswirkung ein extrem schlecht filtrierbarer und auch schlecht waschbarer Filterkuchen sich bildet.

Zu kurze und zu lange Verweilzeiten sind zu vermeiden, da beide zu verminderter $F^-$-Abreicherung führen, im ersten Fall durch unvollständige Umsetzung, im zweiten Fall durch Wiederauflöseserscheinungen. Eine Kontaminierung der Phosphatsalzlösung durch Erdalkaliionen wurde nicht beobachtet.

Aus dem Gesagten geht hervor, daß eine besonders vorteilhafte Ausführungsform der Erfindung in dem Einsatz von Erdalkalihydroxiden in feinster Form bei Temperaturen von ca. 80 °C besteht, wobei $Mg^{2+}$ gegenüber $Ca^{2+}$ den Nachteil besitzt, daß über Tage hinweg schwache Nachfällungen in der Phosphatlösung auftreten.

Es hat sich als sehr vorteilhaft erwiesen, die Erdalkaliverbindung in der zur Reextraktion verwendeten Alkalilösung aufzulösen oder zu suspendieren und die Entfluorierung in der Reextraktionsstufe vorzunehmen, denn damit wird ein separater zusätzlicher Rührbehälter eingespart sowie gleichzeitig eine besonders hohe Entfluorierungswirkung erzielt. Es zeigte sich ferner, daß die sich bildende feste Erdalkaliverbindung anschließend vollständig in der wäßrigen Alkaliphosphatlösung verbleibt und nicht in die organische Phase übergeht und diese damit verunreinigt.

Zusammenfassend können folgende Vorteile des erfindungsgemäßen Verfahrens angeführt werden:

1. hohe $F^-$-Abreicherung bei geringem Einsatz von Erdalkalichemikalien

2. Erdalkali wird in preiswerter Form eingesetzt

3. geringer Apparatebedarf

4. hohe Raum/Zeit-Ausbeute durch sehr gute Filtrationsleistung

5. keine Kontaminierung der Phosphatlösung durch zugesetzte Kationen.

Anhand der nachfolgenden Beispiele soll die Erfindung näher erläutert werden, ohne jedoch den Erfindungsgegenstand darauf einzuschränken:

Stündlich wird 1 l afrikanische Rohsäure (50,34% $P_2O_5$ und 0,21% F) mit 6 l Amylalkohol unter Zusatz von Schwefelsäure mehrstufig extrahiert. Der dabei anfallende organische Phosphorsäureextrakt («Rohextrakt») wird 10-stufig mit Wasser im Volumenverhältnis 25:1 gewaschen. Dabei entsteht ein sog. Reinextrakt, der mit entsprechenden Mengen 50%iger Natronlauge in einem Mixer-Settler einstufig zu Natriumphosphatlösung reextrahiert wird. Die genauen Daten sind in der nachfolgenden Tabelle enthalten.

Beispiele 1–5 (Vergleichsbeispiele)

Durch Reextraktion der Reinextrakte mit unterschiedlichen Mengen 50%iger Natronlauge entstehen drei verschiedene Natriumphosphatlösungen. Diese werden nach der Reextraktion mit den in der Tabelle angegebenen Erdalkaliverbindungen 2 Stunden heiß gerührt und anschließend über ein mit Polypropylen-Nadelfilz bespanntes Druckfilter abfiltriert.

Beispiele 6–9 (erfindungsgemäße Beispiele)

In Abänderung von Beispiel 1, 2, 4 und 5 wurde die Gesamtmenge der Erdalkaliverbindung bereits in der zur Reextraktion benötigten Natronlauge suspendiert bzw. gelöst und zusammen mit dieser in den Reextraktions-Mixer-Settler eingeleitet. Ansonsten blieben alle Zahlenangaben von Beispiel 1, 2, 4 und 5 gleich.

| Beispiel | Reinextrakt % P₂O₅ | Reinextrakt % F | NaOH (50%ig) (ml/h) | Natriumphosphatlösung roh Na:P | % P₂O₅ | % F | Temperatur (°C) | Erdalkaliverbindung Art | Menge (g) | Abfiltrierte Na-phosphatlösung % F | abfließender Alkohol % P₂O₅ |
|---|---|---|---|---|---|---|---|---|---|---|---|
| 1 | 8,99 | 0,026 | 320 | 1:1 | 32,0 | 0,080 | 80 | Ca(OH)₂* | 18,3 | 0,024 | 0,2 |
| 2 | 8,99 | 0,024 | 470 | 1,33:1 | 29,4 | 0,072 | 80 | Ca(OH)₂ | 18,9 | 0,015 | 0,1 |
| 3 | 9,37 | 0,024 | 580 | 1,67:1 | 27,2 | 0,068 | 100 | Ca(OH)₂ | 19,4 | 0,0045 | 0,16 |
| 4 | 9,37 | 0,024 | 580 | 1,67:1 | 27,2 | 0,068 | 80 | Ca(OH)₂ | 19,4 | 0,0095 | 0,15 |
| 5 | 9,37 | 0,024 | 580 | 1,67:1 | 27,2 | 0,068 | 80 | Ca(NO₃)₂·4H₂O | 59,2 | 0,003 | 0,14 |
| 6 | | | | | | | | | | 0,019 | 0,1 |
| 7 | | | | | | | | | | 0,010 | 0,07 |
| 8 | | | | | | | | | | 0,006 | 0,06 |
| 9 | | | | | | | | | | 0,0015 | 0,05 |

* 81% des Ca(OH)₂ sind <8 μm

Die abfließenden Natriumphosphatlösungen, in denen die gesamten umgesetzten Erdalkaliverbindungen suspendiert sind, wurden heiß über ein Druckfilter abfiltriert. Die Fluorgehalte der klaren Filtrate sind stets niedriger als in Beispiel 1, 2, 4 und 5, ebenso die P₂O₅-Gehalte in dem aus der Reextraktions-Stufe abfließenden Alkohol.

**Patentansprüche**

1. Verfahren zur Herstellung von fluorarmen Alkaliphosphatlösungen aus vorgereinigten Alkaliphosphatlösungen, die erhalten werden aus Rohphosphorsäure durch Extraktion mit organischen Lösemitteln, die mit Wasser nicht oder nur begrenzt mischbar sind, Waschung des rohen Extraktes mit Wasser oder einer Alkalilösung, Rückextraktion der Phosphorsäure aus dem gewaschenen Extrakt mit wäßriger Alkalilösung unter Einstellung eines Alkali:P-Molverhältnisses von gleich oder größer 1:1 und Abtrennen der erhaltenen organischen Phase von der gebildeten, vorgereinigten wäßrigen Alkaliphosphatlösung, dadurch gekennzeichnet, daß man

a) die vorgereinigte Alkaliphosphatlösung mit einer Verbindung eines Erdalkalimetalls Me²⁺, die eine Wasserlöslichkeit bei 20 °C von mehr als 0,01 mol Me²⁺/l aufweist, bei Temperaturen von 60 bis 120 °C verrührt, wobei Erdalkaliverbindungen, deren Wasserlöslichkeiten weniger als 5 g/l betragen, mit einer Korngröße eingesetzt werden, die zu mehr als 50% unter 8 μm liegt, und man nach einer Reaktionszeit von 0,5 bis 4 Stunden den gebildeten Niederschlag von der gereinigten Alkaliphosphatlösung abtrennt, wobei man

b) die zur Entfluorierung benötigte Erdalkaliverbindung in der zur Reextraktion benötigten Alkalilösung suspendiert oder löst und die Umsetzung zwischen der Alkaliphosphatlösung und der Erdalkaliverbindung in der Mischzone des Reextraktionsapparates ablaufen läßt.

2. Verfahren nach Anspruch 1, dadurch gekennzeichnet, daß man als Erdalkaliverbindung mit geringer Wasserlöslichkeit feinteilige Erdalkalioxide oder -hydroxide einsetzt.

3. Verfahren nach Anspruch 1, dadurch gekennzeichnet, daß man Erdalkaliverbindungen mit hoher Wasserlöslichkeit in Form einer wäßrigen Lösung der Alkaliphosphatlösung zusetzt.

4. Verfahren nach einem der Ansprüche 1 bis 3, dadurch gekennzeichnet, daß man die Erdalkaliverbindung, bezogen auf die Bildung des entsprechenden Erdalkalifluorids, in der 2- bis 20 fachen stöchiometrischen Menge einsetzt.

5. Verfahren nach einem der Ansprüche 1 bis 4, dadurch gekennzeichnet, daß man den in Stufe a) abgetrennten Niederschlag mit warmem Wasser auswäscht.

6. Verfahren nach einem der Ansprüche 1 bis 5, dadurch gekennzeichnet, daß man den in Stufe a) abgetrennten Niederschlag in der Waschlösung, die in der Extraktwaschung anfällt, suspendiert oder auflöst und zusammen mit dieser Waschlösung zur Extraktion zurückführt.

## Claims

1. A process for the preparation of low-fluorine alkali metal phosphate solutions from pre-purified alkali metal phosphate solutions which ar obtained from crude phosphoric acid by extraction with organic solvents which are immiscible with water or only sparingly miscible with water, washing the crude extract with water or an alkali solution, re-extracting the phosphoric acid from the washed extract using aqueous alkali solution to produce an alkali metal : P molar ratio of greater than or equal to 1:1, and separating the organic phase obtained from the pre-purified aqueous alkali metal phosphate solution formed, which comprises

a) stirring the pre-purified alkali metal phosphate solution with a compound of an alkaline earth metal $Me^{2+}$ having a water solubility at 20 °C of greater than 0.01 mol of $Me^{2+}/l$, at temperatures of from 60 to 120 °C, alkaline earth metal compounds which have water solubilities of less than 5 g/l and more than 50% of the grains of which have sizes less than 8 μm being employed, and separating the precipitate formed from the purified alkali metal phosphate solution after a reaction time of 0.5 to 4 hours,

b) the alkaline eart metal compound required for defluorination being suspended or dissolved in the alkali solution required for reextraction, and the reaction between the alkali metal phosphate solution and the alkaline earth metal compound being allowed to proceed in the mixing zone of the re-extraction apparatus.

2. The process as claimed in claim 1, wherein the alkaline earth metal compounds employed of low water solubility are finely divided alkaline earth metal oxides or hydroxides.

3. The process as claimed in claim 1, wherein alkaline earth metal compounds of high water solubility in the form of an aqueous solution are added to the alkali metal phosphate solution.

4. The process as claimed in one or more of claims 1 to 3, wherein the alkaline earth metal compound is employed in twice to twenty times the stochiometric amount, based on the formation of the corresponding alkaline earth metal fluoride.

5. The process as claimed in any one of claims 1 to 4, wherein the precipitate separated off in step a) is washed with warm water.

6. The process as claimed in any one of claims 1 to 5, wherein the precipitate separated off in step a) is suspended or dissolved in the washing solution produced during extract washing and is recycled to extraction together with this washing solution.

## Revendications

1. Procédé pour la fabrication de solutions de phosphates alcalins pauvres en fluor à partir de solutions de phosphates alcalins préalablement purifiées, qui sont obtenues à partir d'acide phosphorique brut par extraction par des solvants organiques qui ne sont pas miscibles ou n'ont qu'une miscibilité limitée avec l'eau, lavage de l'extrait brut par l'eau ou par une solution alcaline, réextraction de l'acide phosphorique de l'extrait lavé par une solution aqueuse d'alcali avec réglage d'un rapport molaire alcali : P égal ou supérieur à 1:1 et séparation de la phase organique obtenue de la solution aqueuse de phosphate alcalin prépurifiée formée, caractérisé en ce que

a) on mélange la solution de phosphate alcalin préalablement purifiée avec un composé d'un métal alcalino-terreux $Me^{2+}$, qui présente une solubilité dans l'eau à 20 °C de plus de 0,01 mol de $Me^{2+}/l$, à des températures de 60 à 120 °C, en utilisant des composés alcalino-terreux dont la solubilité dans l'eau est de moins de 5 g/l, qui ont à plus de 50% une granulométrie de moins de 8 μm, et on sépare le précipité formé de la solution de phosphate alcalin purifiée après une durée de réaction de 0,5 à 4 h, et

b) en mettant en suspension ou en dissolvant le composé alcalinoterreux nécessaire pour la défluoruration et en laissant la réaction entre la solution de phosphate alcalin et le composé alcalino-terreux se dérouler dans la zone de mélange de l'appareil de réextraction.

2. Procédé selon la revendication 1, caractérisé en ce que l'on utilise comme composés alcalinoterreux de faible solubilité dans l'eau des oxydes ou hydroxydes alcalino-terreux en fines particules.

3. Procédé selon la revendication 1, caractérisé en ce que l'on ajoute à la solution de phosphate alcalin des composés alcalino-terreux de solubilité dans l'eau élevée sous forme d'une solution aqueuse.

4. Procédé selon l'une des revendications 1 à 3, caractérisé en ce que l'on utilise le composé alcalino-terreux en quantité de 2 à 20 fois la quantité stoechiométrique, par rapport à la formation du fluorure alcalino-terreux correspondant.

5. Procédé selon l'une des revendications 1 à 4, caractérisé en ce que l'on lave à l'eau chaude le précipité séparé dans l'étape a).

6. Procédé selon l'une des revendications 1 à 5, caractérisé en ce que l'on met le précipité séparé en suspension ou en solution dans la solution de lavage qui se forme dans le lavage de l'extrait et on le recycle avec cette solution de lavage pour l'extraction.